# FASCICULE DE BREVET EUROPEEN

(11) **EP 1 473 610 B1**
(45) Date de publication et mention de la délivrance du brevet: **09.01.2008**
(21) Numéro de dépôt: 04300213.8
(22) Date de dépôt: 19.04.2004
(51) Int. Cl.: G05B 19/409

(54) **Terminal d'exploitation, notamment pour automatismes**
Betriebsterminal, insbesondere für Automatisierungssystem
Operating terminal, particularly for automation

(30) Priorité: 22.04.2003 FR 0304909
(43) Date de publication de la demande: 03.11.2004
(73) Titulaire: SCHNEIDER ELECTRIC INDUSTRIES SAS, 92500 Rueil-Malmaison (FR)
(72) Inventeur: Dallet, Hervé, 16590 Brie (FR); Nebout, Jean-Marie, 16410 Garat (FR)

(56) Documents cités:
- WO-A-01/67191
- FR-A- 2 726 382
- US-A- 4 943 906

## Description

La présente invention se rapporte à un terminal d'exploitation pour un système d'appareils ou une machine, notamment pour un système automatisé, du type présentant un afficheur et des touches de navigation et de fonction.

Un tel terminal a notamment pour but de faire dialoguer un opérateur avec le système automatisé, par exemple à fin de diagnostic ou de commande. L'afficheur propre au terminal, simple et peu onéreux du fait qu'il peut être non graphique, est apte à la visualisation de pages qui sont organisées selon au moins un menu et qui se composent de lignes de texte à caractères alphanumériques destinées au dialogue de l'opérateur avec le système automatisé. De tels terminaux sont connus sous la désignation série XBT Magelis, Télémécanique.

Les terminaux de dialogue entre un opérateur et un système automatisé ou de communication, que ces terminaux soient industriels, téléphoniques, bancaires, .. doivent souvent avoir un très faible encombrement. Ceci vaut pour d'une part pour l'afficheur et d'autre part pour les touches. Ainsi l'afficheur ne permet de visualiser qu'un petit nombre de lignes et l'on contourne cette difficulté en systématisant le défilement (scrolling) des lignes au moyen de touches de déroulement, et en permettant une navigation parmi les pages à consulter au moyen de touches de navigation.

Pour réduire l'encombrement, on utilise un nombre de touches aussi faible que possible, en attribuant à ces touches une fonction variable. Cette attribution s'effectue soit en changeant cette fonction par actionnement d'une autre touche (shift), soit en localisant les touches le long d'au moins un côté de l'afficheur et en leur conférant une fonction automatiquement évolutive selon les étapes de dialogue ou de processus, la fonction des touches étant alors rappelée sur l'afficheur en regard des touches respectives (voir par exemple documents EP 133 397 et WO 01/67191). Les terminaux connus ont besoin d'être simplifiés, tout en étant adaptés l'exploitation d'équipements d'automatismes très divers.

L'invention a notamment pour but de permettre à un opérateur de disposer, dans un terminal du type précité, d'un grand nombre de fonctions de commande, avec un nombre de touches réduit, et de pouvoir dialoguer d'une manière intuitive et bien appropriée au caractère booléen des commandes de systèmes automatisés très divers.

Le problème technique que se propose de résoudre l'invention est résolu par un terminal d'exploitation selon la revendication 1.

L'invention concerne un terminal du type comprenant un afficheur à écran utilisé en mode non graphique, apte à la visualisation de pages organisées en menu et composées de lignes destinées au dialogue d'un opérateur avec le système, notamment à fin de surveillance, de diagnostic et de commande. Le terminal comporte au moins un organe de déroulement et des touches de fonction , les pages de texte comprenant des symboles placés dans les lignes et désignant des touches de fonction, l'organe de déroulement étant actionnable par l'opérateur pour sélectionner une ligne ; et le terminal comporte une application de dialogue créée par l'opérateur et comprenant des données de dialogue affichables sur les lignes sous forme de texte à caractères alphanumériques et un logiciel interne qui est apte à traiter les données de dialogue et gérer le processus de visualisation.

Selon l'invention, au moins une ligne visualisée sur l'afficheur définit deux actions de commande booléennes visant au moins un organe d'automatisme, la ligne présentant deux symboles respectifs, représentatifs des actions booléennes respectives de commande, et deux touches de fonction, situées latéralement à gauche et à droite de l'afficheur, sont susceptibles d'être désignées de façon non ambiguë par les symboles d'actions booléennes de commande, et sont actionnables par l'opérateur pour exécuter l'une ou l'autre des deux actions de commande propres à la ligne.

L'action de commande, et les symboles associés, peuvent aussi êtredu type transfert, ou du type incrémentation/décrémentation, en étant ainsi bien adaptés à l'intervention sur le système d'automatisme. La sélection de la ligne peut entraîner la sélection des deux symboles gauche et droit d'action de commande, chaque action de commande attachée à un symbole étant déclenchée par actionnement de la touche de fonction gauche ou droite respective. Il est avantageux que l'une au moins des lignes du texte se compose d'une partie gauche et d'une partie droite, définissant deux variables de commande booléennes respectives visant un même composant du système d'automatisme, et que les deux symboles d'action de commande respectifs soient représentatifs de fonctions duales (marche-arrêt, ou set-reset, ...) du composant en cause.

De préférence, chaque symbole d'action comprend une flèche dirigée vers la gauche ou vers la droite, et les touches de fonction sont disposées latéralement à l'écran et sont fléchées dans le même sens que la flèche adjacente. Il est intéressant que la sélection d'une ligne détermine l'affichage d'attributs visuels spécifiques des symboles d'action de commande.

Le symbole d'action de commande est avantageusement représentatif de l'état courant de la variable booléenne assujettie à l'action de commande. L'action de commande booléenne déclenchée par l'actionnement de la touche de fonction peut être du type maintenu ou du type impulsionnel, par analogie avec un actionnement par bouton-poussoir à accrochage ou à impulsion.

Lorsqu'au moins une ligne visualisée sur l'afficheur définit une action de navigation, et présente un symbole de navigation, le logiciel interne attribue aux touches de fonction une fonction de navigation quand la ligne respective a été sélectionnée par l'organe de déroulement. De préférence, à l'affichage d'une page, aucune ligne dotée de symboles d'action de commande n'est sélectionnée, l'activation d'une action de commande étant subordonnée à la sélection de la ligne respective au moyen de l'organe de déroulement.

D'autres caractéristiques et avantages vont apparaître dans la description détaillée qui suit, avec référence à un mode de réalisation donné à titre d'exemple et représenté par les dessins annexés.
La figure 1 représente schématiquement un équipement d'automatisme doté d'un terminal d'exploitation selon l'invention.
La figure 2 montre l'afficheur et l'aire de dialogue dans un exemple de réalisation du terminal.
La figure 3 illustre schématiquement un exemple d'affichage.
La figure 4 illustre la phase de création de l'application de dialogue du terminal.
La figure 5 illustre la phase d'exploitation du terminal.

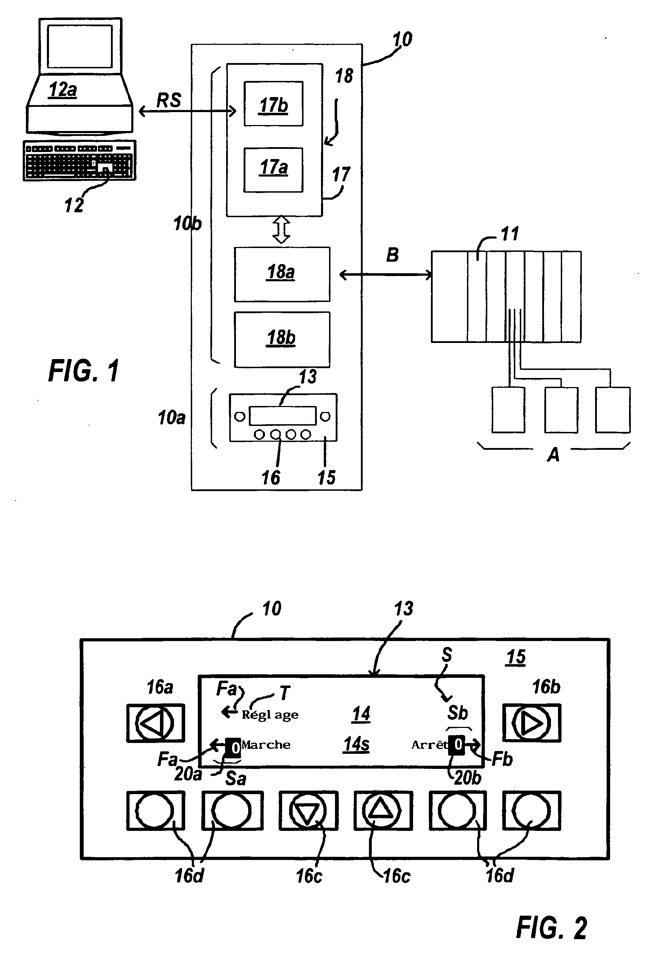

L'équipement d'automatisme illustré sur la figure 1 comprend un terminal d'exploitation 10 conforme à l'invention, qui peut opérer dans un mode exploitation et dans un mode création d'application. En mode exploitation, le terminal est relié via une liaison B, notamment sous un protocole de communication communément utilisé dans un tel équipement, à un organe commandant l'équipement, par exemple un contrôleur programmable 11 lui-même relié à des appareils A,. Le terminal 10 est relié en mode création d'application à un ordinateur personnel (PC) 12 ou station analogue par une liaison série RS.

Le terminal 10 comprend une partie matérielle 10a et une partie logicielle 10b ; la partie matérielle 10a présente une unité centrale, une mémoire nécessaire à son fonctionnement, une mémoire non volatile pour mémoriser données et programme, ainsi qu'un afficheur 13 à écran non graphique, c'est-à-dire propre à visualiser plusieurs lignes 14 de caractères alphanumériques (voir figure 2), et un ensemble de touches 16 disposées sur une aire 15 du terminal qui est adjacente à l'afficheur. Par écran non graphique, on désigne un écran purement non graphique aussi bien qu'un écran graphique utilisé en mode non graphique. La capacité de chaque ligne visualisée est quelconque, par exemple de 20 caractères, 40 caractères ou tout nombre de caractères voulu compatible avec la performance et le faible encombrement souhaités du terminal.

La partie logicielle 10b du terminal comprend un sous-ensemble logiciel constructeur 17 présentant un module d'exploitation BIOS 17a capable de gérer l'ensemble de la partie matérielle 10a, un logiciel de chargement 17b, ainsi qu'un sous-ensemble logiciel applicatif 18 présentant un logiciel d'exécution (runtime) 18a et un ensemble de données 18b correspondant à l'application écrite par l'opérateur. Pour simplifier, les références indiquées désignent aussi bien les logiciels en cause que les zones des mémoires du terminal contenant ces logiciels.

Les lignes 14 visualisées sur l'afficheur 13 se composent d'un texte T et d'au moins un symbole S d'action de commande. Selon l'invention, chaque ligne 14 peut définir, par dualité du texte et des symboles, des actions de commande duales à exécuter par un même organe d'automatisme (par exemple "marche" et "arrêt" d'un convoyeur) ou des actions booléennes à exécuter par deux organes d'automatisme liés à une même fonction d'automatisme (par exemple "armoire 1" et "armoire 2" pour une fonction "éclairage" ou "ventilation"). Le symbole S d'action de commande comprend un symbole de flèche F et peut comprendre, selon les lignes 14 considérées, un symbole d'action de commande booléenne 20, un symbole d'action de transfert 21, un symbole d'action d'incrémentation / décrémentation 22 ou un symbole d'action de navigation. Le symbole de flèche F est de préférence placé à gauche ou à droite du texte T et il est dirigé vers la gauche ou respectivement vers la droite, pour désigner de façon non ambiguë une touche de fonction respective, comme il sera décrit plus loin.

Quand l'action est une action de commande booléenne, le symbole est un symbole d'action de commande booléenne 20, qui vise à changer l'état booléen d'un organe A du système. Le symbole 20 comprend alors par exemple la valeur "0" ou "1", représentatif de l'état courant de l'organe A.

On peut prévoir, outre les actions décrites de commande booléenne, des actions de commande de transfert, ou des actions de commande d'incrémentation /décrémentation tirant parti de la disposition gauche/droite des touches et des symboles fléchés respectifs. Pour une action de transfert, le symbole est un symbole d'action de commande de transfert 21, et il comprend une désignation appropriée, par exemple "v". Une telle action de commande a pour rôle de charger une valeur numérique constante mémorisée au préalable ou modifiable et de la transférer vers une variable du système d'automatisme. Pour une action de commande d'incrémentation /décrémentation, le symbole est un indicateur d'incrémentation ou de décrémentation et il comprend une désignation appropriée, par exemple un signe / pour incrémenter ou un signe \ pour décrémenter. Une telle action a pour rôle d'incrémenter ou décrémenter la valeur d'une variable du système d'automatisme.

L'action de commande peut à certains stades être une action de navigation, et le symbole se confondre avantageusement avec le symbole de flèche F précité. Une telle action de navigation vise à déclencher la visualisation d'une page autre que la page courante, selon l'organisation des pages en menu.

La figure 2 montre plus en détail le terminal 10 avec ses touches 16 disposées près de l'afficheur 13 et ce sur l'aire 15 entourant l'afficheur. Les touches 16 comprennent une touche de fonction 16a (à gauche), une touche de fonction 16b (à droite), des touches 16c de déroulement, et des touches de service 16d. Les deux touches de fonction 16a,16b sont de préférence situées à gauche et à droite, chacune près d'un petit côté de l'afficheur, mais elles peuvent aussi être situées un peu en dessous de l'afficheur à gauche et à droite. Les deux touches 16c de déroulement sont situées sous le grand côté de l'afficheur et servent à sélectionner, par déroulement (scrolling) montant ou descendant, une ligne d'un écran en cours de visualisation. Les touches 16c peuvent être remplacées par un organe unique de déroulement. Les touches ou l'organe 16 assurent, si la page à afficher présente un nombre de lignes plus grand que celui visualisable sur l'écran, le déroulement vers les lignes voulues de la page.

Il convient d'observer que les touches 16a,16b ont une affectation dynamique, de sorte qu'elles peuvent prendre au gré de la programmation des différentes lignes une fonction booléenne, une fonction de transfert ou une fonction d'incrémentation /décrémentation. Les touches 16a,16b ont aussi un rôle de navigation dans le menu. Les quatre touches de service 16d sont situées sous le grand côté de l'afficheur, en ligne avec les touches de navigation. Ces touches de service peuvent être dédiées de façon bien connue aux commandes de validation, choix de mode, effacement de caractère, etc..

Un exemple de page d'écran à trois lignes est représenté sur la figure 2. Une sélection de la ligne appropriée est provoquée par un déroulement des lignes de la page au moyen de l'une ou l'autre touche 16c, ce qui se traduit sur l'afficheur par une modification de l'aspect visuel de la ligne, de préférence par un attribut visuel appliqué au symbole S. Une navigation dans le menu s'obtient par un changement de page ; un tel changement résulte de l'actionnement de l'une des touches de fonction, ici de la touche de fonction gauche 16a qui se trouve désignée par un symbole d'action de navigation fléché Fa situé à gauche.

A titre d'exemple, la commande d'un moteur peut être produite, après déroulement pour sélectionner la ligne respective 14s, par activation de la fonction "marche" ou "arrêt" du moteur obtenue par un actionnement de la touche 16a ou 16b désignée par la flèche Fa ou Fb d'un symbole gauche Sa ou droit Sb. Pour que l'état sélectionné d'une ligne soit facilement repérable ; les symboles d'action gauche 20a et droit 20b de la ligne 14 sont dotés d'un attribut visuel et passent par exemple de préférence en vidéo inverse avec clignotement quand la ligne 14s a été sélectionnée. Au lieu des symboles booléens 20a,20b illustrés par la figure 2, il peut s'agir de symboles de transfert 21 a,21 b, de symboles d'incrémentation / décrémentation 22a,22b ou de symboles de navigation alors constitués par les flèches Fa,Fb.

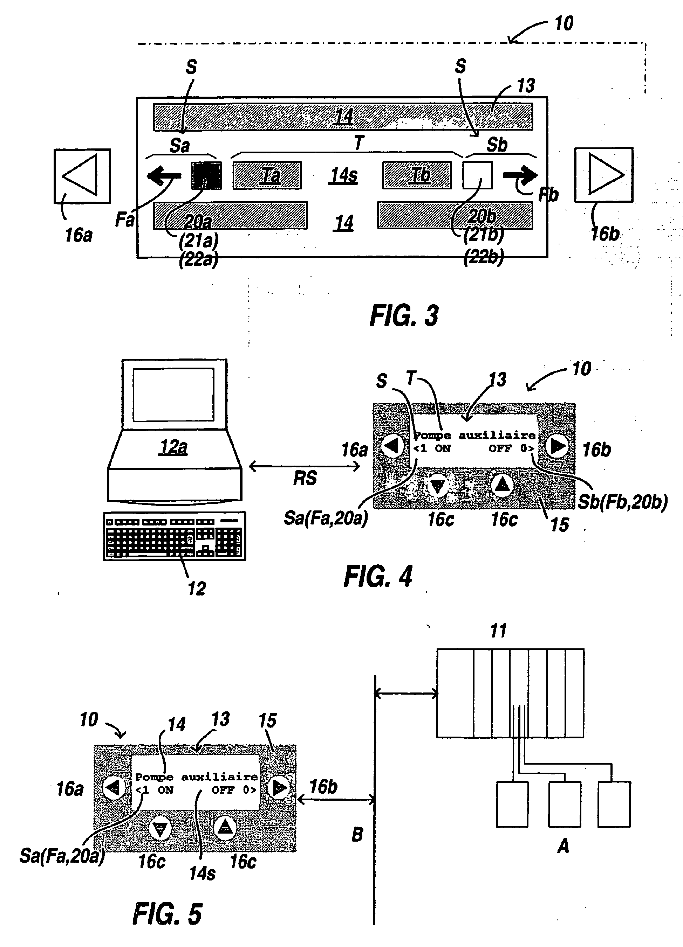

Dans un mode de réalisation préféré pour son extrême simplicité, le texte T et les symboles S d'action de commande peuvent ainsi être représentés exclusivement sous forme de caractères ASCII (voir figures 3 et 4 et tableaux I à V), les symboles de flèche étant alors constitués par le caractère ASCII < ou >.

L'écran illustré sur la figure 3 montre les différentes lignes 14 visualisées sur l'afficheur 13. En supposant qu'une ligne médiane 14s a été sélectionnée, et que le texte T de cette ligne comporte une partie gauche de texte Ta et une partie droite de texte Tb, les symboles correspondants S comprennent à gauche une flèche Fa, dirigée vers la touche adjacente 16a, et un symbole d'action de commande 20a (ou de transfert 21 a, ou d'incrémentation / décrémentation 22a) et à droite une flèche Fb, dirigée vers la touche adjacente 16b, et un symbole d'action de commande 20b (ou de transfert 21b ou d'incrémentation / décrémentation 22b).

La figure 4 illustre le mode de création d'une application par l'opérateur : le terminal 10 est relié par une liaison série RS à un ordinateur personnel 12. Celui-ci utilise un logiciel 12a de configuration, spécifique de la famille de terminaux à laquelle appartient le terminal 10, de sorte que l'opérateur peut sélectionner dans des tables respectives le type de terminal et le protocole de communication souhaités, et écrire le contenu des différents écrans du menu qu'il a conçu, en précisant la nature des actions (navigation, commande booléenne, commande de transfert, commande d'incrémentation /décrémentation) associées aux diverses lignes. L'application mise au point est transférée dans la zone de mémoire applicative 18 du terminal.

La figure 5 illustre le mode exploitation du terminal. Dans ce mode, l'opérateur sélectionne dans un écran la ligne de texte voulue 14s au moyen des touches 16c, et les symboles d'action S de cette ligne sont alors dotés d'un attribut visuel spécifique, par exemple en passant en affichage vidéo inverse avec clignotement. Si la ligne ou partie de ligne visée est de nature "action de navigation", l'actionnement de la touche de fonction gauche 16a ou droite 16b engendre la visualisation d'une page visée par la flèche, selon le menu organisant les pages. Si la ligne ou partie de ligne visée est de nature "action de commande", l'actionnement de la touche engendre la commutation de l'appareil visé (commande booléenne), ou le chargement d'une valeur de variable d'automatisme (commande d'écriture directe), ou la modification d'une valeur de variable d'automatisme (commande d'incrémentation / décrémentation). On ne peut sélectionner qu'une ligne à la fois. Lorsqu'une ligne définit deux actions de commande, la sélection de la ligne entraîne la sélection simultanée des deux actions de commande et chaque action est déclenchée respectivement par l'actionnement de la touche de fonction associée.

De préférence, à l'affichage d'une page, aucune ligne de commande n'est visée et l'activation d'une action de commande est subordonnée à la sélection de la ligne respective 14s au moyen de l'organe de déroulement 16c. Ceci permet d'assurer une plus grande sécurité de commande.

Les tableaux I à IV qui suivent illustrent différents exemples d'utilisation de mise en oeuvre de symboles de commande.

### Exemple 1

l'équipement d'automatisme comporte des actionneurs susceptibles d'être commandés à l'aide d'une variable booléenne, mais nécessitant deux boutons, par exemple dans le cas d'un départ-moteur ou d'un actionneur dangereux. (tableau I ci-dessous)

**Tableau I**

| | |
|---|---|
| page affichée présentant les différents actionneurs pouvant être commandés. la ligne 14s « convoyeur n°2 » est sélectionnée. | 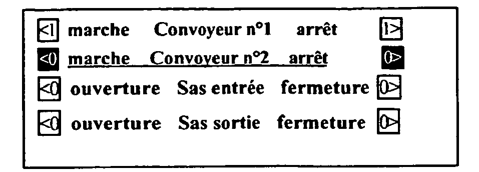 |
| appui sur l'organe de déroulement 16c (vers le bas) pour sélectionner l'actionneur suivant (sas entrée). | 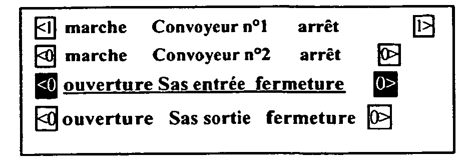 |
| appui sur touche gauche16a pour commander l'ouverture du « sas entrée ».(action SET) 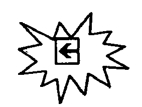 | 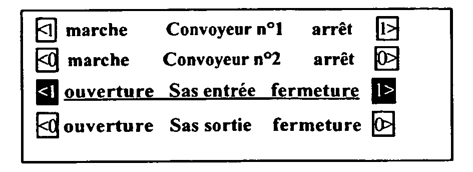 |
| relâchement de la touche 16a | 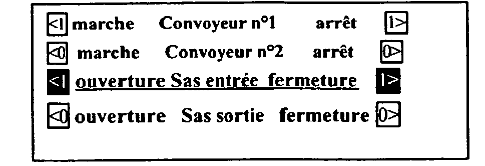 |
| pour fermer le « sas entrée », appui sur touche droite 16b (action RESET) 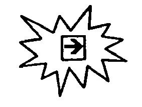 | 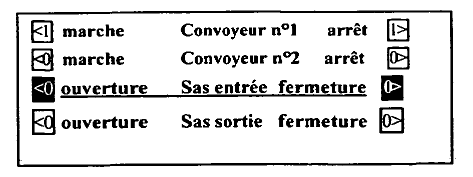 |

### Exemple II

l'équipement d'automatisme comporte des actionneurs bistables nécessitant deux variables booléennes, par exemple dans le cas d'un vérin à électrovanne bistable. L'action de commande booléenne est impulsionnelle, de sorte que le temps de pression de la touche de fonction associée au symbole se traduit par une commande de même durée et par une visualisation de même durée pour l'état du symbole. Pour chaque actionneur, les deux symboles agissent chacun sur une variable distincte.

**Tableau II**

| | |
|---|---|
| page affichée présentant les différents actionneurs pouvant être commandés. la ligne 14s « pince n°2 » est sélectionnée | 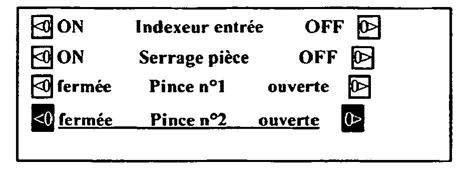 |
| appui sur l'organe de déroulement 16c (vers le haut) pour sélectionner l'actionneur précédent (pince n°1). | 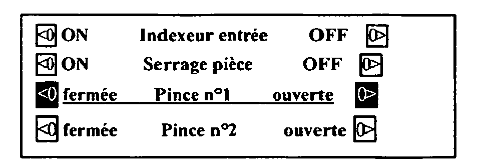 |
| appui sur touche gauche 16a pour commander la fermeture de la « pince n°1 ». 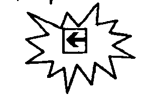 tant que la touche 16a est appuyée, la variable associée au symbole d'action gauche est à 1. | 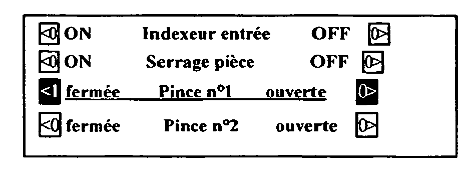 |
| relâchement de la touche 16a : la variable associée au symbole d'action gauche revient à 0 | 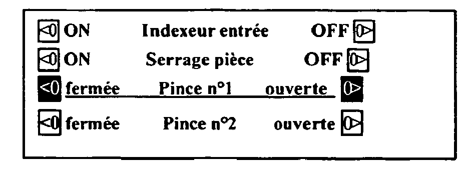 |
| pour ouvrir la « pince n°1 », appui sur touche droite 16b tant que la touche 16b 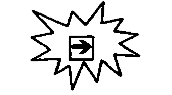 est appuyée, la variable associée au symbole d'action droit est à 1. | 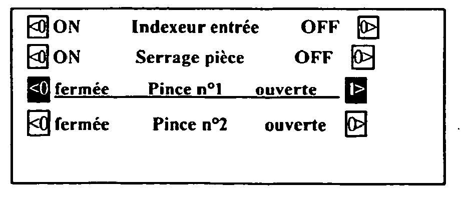 |

### Exemple III

l'équipement d'automatisme comporte des actionneurs monostables à un seul bouton, par exemple dans le cas de vérins à rappel par ressort, de commandes d'éclairage. Les touches de fonction jouent le rôle de boutons à accrochage (pousser-pousser). Chaque symbole d'action de commande booléenne agit sur une variable distincte.

**Tableau III**

| | |
|---|---|
| page affichée présentant les différentes actions réalisables. la ligne "ventilation des armoires 1 ou 2" est sélectionnée et donne la possibilité de commander la ventilation de ces deux armoires. | 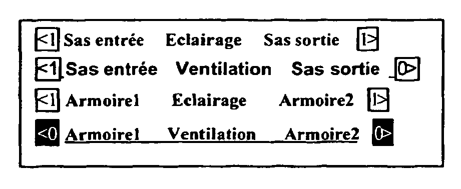 |
| appui sur l'organe de déroulement (vers le haut) pour sélectionner la ligne 14s "éclairage armoires 1 et 2". | 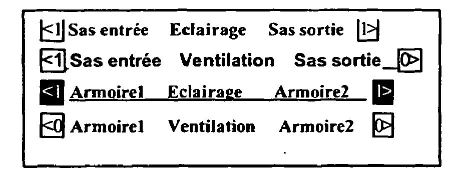 |
| appui sur touche gauche 16a pour arrêter l'éclairage de l'armoire 1. 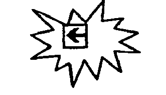 | 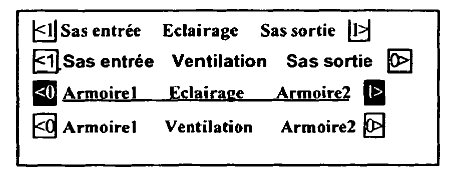 |
| appui sur l'organe de déroulement 16c (vers le haut) pour sélectionner la commande de ventilation des sas. | 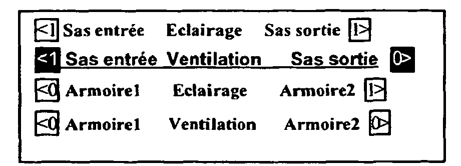 |
| appui sur touche droite 16b pour mettre en marche la ventilation du sas de sortie. 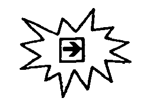 | 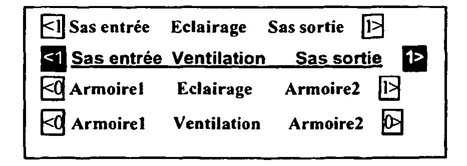 |

### Exemple IV

l'équipement d'automatisme présente des organes nécessitant un réglage de positionnement, de vitesse, de seuil, ... Les symboles d'action de transfert 21 ont une fonction d'incrémentation (à gauche) et de décrémentation (à droite). Pour chaque réglage, les deux symboles agissent sur la même variable. Les touches de fonction jouent comme dans l'exemple II le rôle de boutons à commande impulsionnelle. Le texte de la ligne 14s comprend la valeur réglée.

**Tableau IV**

| | |
|---|---|
| page affichée présentant les différents réglages réalisables. Ici, le réglage « température sas entrée » est sélectionné. | 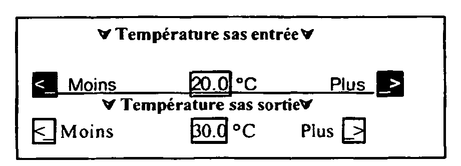 |
| appui sur l'organe de déroulement 16c (vers le bas) pour sélectionner le réglage suivant (température sas sortie). | 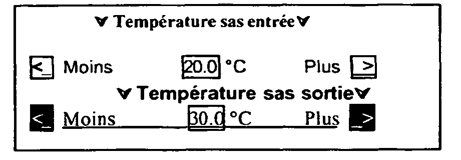 |
| appui sur touche droite 16b pour incrémenter la valeur de la variable. 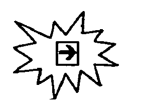 le symbole d'action indique que l'incrémentation est en cours tant que la touche 16b est appuyée. | 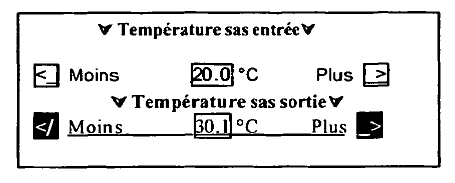 |
| relâchement touche après quelques incréments. | 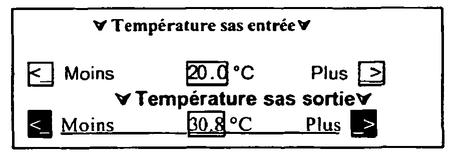 |
| appui sur touche gauche 16a pour décrémenter la valeur de la variable. 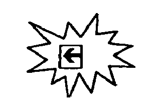 le symbole d'action indique que la décrémentation est en cours tant que la touche gauche 16a est appuyée. | 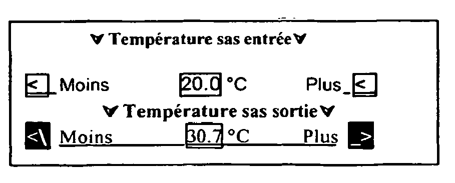 |

## Revendications

1. Terminal d'exploitation pour système d'appareils ou machine, notamment pour système d'automatisme, comprenant :
- un afficheur (13) à écran utilisé en mode non graphique, apte à la visualisation de pages organisées en menu et composées de lignes (14) destinées au dialogue d'un opérateur avec le système, notamment à fin de surveillance, de diagnostic et de commande,
- au moins un organe de déroulement (16c) et des touches de fonction (16), les pages de texte comprenant des symboles (S) placés dans les lignes (14) et désignant des touches de fonction, l'organe de déroulement (16c) étant actionnable par l'opérateur pour sélectionner une ligne (14),
- une application de dialogue créée par l'opérateur et comprenant des données de dialogue affichables sur les lignes (14) sous forme de texte (T) à caractères alphanumériques et un logiciel interne (18) qui est apte à traiter les données de dialogue et gérer le processus de visualisation,
***caractérisé par le fait que** :*
- au moins une ligne (14) visualisée sur l'afficheur (13) et sélectionnée par l'opérateur définit deux actions de commande visant un organe d'automatisme, ces actions étant selon la ligne considérée des actions de commande booléennes, ou de commande d'incrémentation et décrémentation, la ligne présentant deux symboles respectifs (Sa,Sb), situés à gauche et à droite et représentatifs des actions de commande,
- deux touches de fonction (16a, 16b) situées latéralement à gauche et à droite de l'afficheur sont susceptibles d'être désignées de façon non ambiguë par les symboles d'actions de commande (Sa,Sb), et sont actionnables par l'opérateur pour ordonner l'une ou l'autre des deux actions de commande propres à la ligne.

2. Terminal selon la revendication 1, ***caractérisé par le fait que*** la sélection de la ligne (14s) entraîne la sélection des deux symboles d'action de commande (Sa,Sb), chaque action de commande attachée à un symbole étant déclenchée par actionnement de la touche de fonction respective (16a, 16b).

3. Terminal selon la revendication 1, ***caractérisé par le fait que*** l'une au moins des lignes (14) du texte se compose d'une partie gauche et d'une partie droite, définissant deux actions duales de commande respectives, et les deux symboles d'action de commande respectifs (Sa,Sb) sont représentatifs de fonctions duales d'un même composant (A) du système d'automatisme.

4. Terminal selon la revendication 1, ***caractérisé par le fait que*** la sélection d'une ligne (14s) détermine l'affichage d'un attribut visuel spécifique du ou des symboles d'action de commande (Sa,Sb)

5. Terminal selon la revendication 1, ***caractérisé par le fait que*** le symbole d'action de commande (20a, 20b) est représentatif de l'état courant de la variable booléenne assujettie à l'action de commande

6. Terminal selon la revendication 1, ***caractérisé par le fait que*** l'action de commande booléenne déclenchée par l'actionnement de la touche de fonction (16a, 16b) est du type maintenu ou du type impulsionnel.

7. Terminal selon la revendication 1, ***caractérisé par le fait que*** l'action de commande booléenne déclenchée par l'actionnement de la touche de fonction (16a, 16b) est du type set ou reset.

8. Terminal selon la revendication 1, ***caractérisé par le fait* qu'**il est prévu, outre une action de commande booléenne, une action de transfert, ou une action d'incrémentation ou décrémentation, et le symbole (S) d'action de commande est alors respectivement un symbole (21) d'action de transfert ou un symbole (22) d'action de commande d'incrémentation ou décrémentation.

9. Terminal selon la revendication 8, **caractérisé *par le fait que****,* lorsque l'action de commande est du type incrémentation ou décrémentation, les touches de fonction gauche et droite (16a, 16b) sont associées l'une à l'incrémentation et l'autre à la décrémentation.

10. Terminal selon la revendication 8, ***caractérisé par le fait que**,* lorsque l'action de commande est du type transfert ou incrémentation *l* décrémentation, une représentation spécifique est adjointe au symbole respectif pendant que l'action s'effectue.

11. Terminal selon la revendication 1, **caractérisé par le fait qu'**à l'affichage d'une page, aucune ligne dotée de symboles d'action de commande n'est sélectionnée, l'activation d'une action de commande étant subordonnée à la sélection de la ligne respective (14s) au moyen de l'organe de déroulement (16c).

12. Terminal selon la revendication 1 ***caracterisé par le fait que*** les symboles d'action (S) et les textes des lignes (14) se composent exclusivement de caractères ASCII.

13. Terminal selon la revendication 1, ***caractérisé par le fait que*** chaque symbole (S) d'action comprend une flèche (Fa,Fb) dirigée vers la gauche ou la droite, les touches de fonction (16a, 16b) étant disposées latéralement à l'écran et fléchées dans le même sens que la flèche adjacente (Fa, Fb).

## Claims

1. Operating terminal for a system of devices or a machine, particularly for an automation system, comprising :
- a display (13) with a screen used in non-graphic mode, capable of displaying pages organised in menus and composed of lines (14) for use for an operator's dialogue with the system, particularly for surveillance, diagnostic and control purposes,
- at least one scroll device (16c) and function keys (16), the text pages comprising symbols (S) placed in the lines (14) and denoting function keys, the scroll device (16c) being useable by the operator to select a line (14),
- a dialogue application created by the operator and comprising dialogue data that can be displayed on lines (14) in text form (T) using alphanumeric characters and internal software (18) capable of processing dialogue data and managing the display process,
**characterised by** the fact that :
- at least one line (14) displayed on the display (13) and selected by the operator defines two control actions applicable to an automation device, these actions being Boolean control actions, or increment /decrement control actions, depending on the line considered, the line containing two respective symbols (Sa, Sb) on the left and right and representing control actions,
- two function keys (16a, 16b) on the left and right sides of the display can be unambiguously designated by the control action symbols (Sa, Sb), and can be pressed by the operator to perform either of the two control actions specific to the line.

2. Terminal according to claim 1, **characterised by** the fact that selecting the line (14s) causes selection of the two control action symbols (Sa, Sb), each control action attached to a symbol being triggered by pressing the corresponding function key (16a, 16b).

3. Terminal according to claim 1, **characterised by** the fact that at least one of the text lines (14) is composed of a left part and a right part, defining two respective dual control actions, and the respective two control action symbols (Sa, Sb) are representative of dual functions of the same component (A) in the automation system.

4. Terminal according to claim 1, **characterised by** the fact that selecting a line (14s) determines the display of a visual attribute specific to the control action symbol(s) (Sa, Sb).

5. Terminal according to claim 1, **characterised by** the fact that the control action symbol (20a, 20b) is representative of the current state of the Boolean variable to which the control action is applicable.

6. Terminal according to claim 1, **characterised by** the fact that the Boolean control action triggered by pressing the function key (16a, 16b) is of the held type or the single press type.

7. Terminal according to claim 1, **characterised by** the fact that the Boolean control action triggered by pressing the function key (16a, 16b) is of the set type or the reset type.

8. Terminal according to claim 1, **characterised by** the fact that apart from a Boolean control action, a transfer action, or an increment / decrement action are provided, and the control action symbol (S) is then, respectively a transfer action symbol (21) or an increment / decrement control action symbol (22).

9. Terminal according to claim 8, **characterised by** the fact that, when the control action is of the increment or decrement type, one of the left and right function keys (16a, 16b) is associated with the increment and the other with the decrement.

10. Terminal according to claim 8, **characterised by** the fact that, when the control action is of the transfer or increment / decrement type, a specific display is attached to the respective symbol while the action is being carried out.

11. Terminal according to claim 1, **characterised by** the fact that when a page is displayed, no lines with control action symbols will be selected, it not being possible for a control action to be activated until the respective line (14s) has been selected using the scroll device (16c).

12. Terminal according to claim 1, **characterised by** the fact that the action symbols (S) and texts of lines (14) are composed exclusively of ASCII characters.

13. Terminal according to claim 1, **characterised by** the fact that each action symbol (S) comprises an arrow (Fa, Fb) pointing towards the left or towards the right, the function keys (16a, 16b) being arranged on the side of the screen and arrows being marked on them in the same direction as the adjacent arrow (Fa, Fb).

## Patentansprüche

1. Betriebsterminal für ein Gerätesystem oder eine Maschine, insbesondere für ein Automatisierungssystem mit :
- einem im nicht-grafischen Modus benutzten Bildschirmdisplay (13), das als Menü organisierte Seiten anzeigen kann und aus Zeilen (14) besteht, die für den Dialog eines Bedieners mit dem System bestimmt sind, insbesondere zum Zweck der Überwachung, Diagnose und des Befehls;
- mindestens einem Rollorgan (16c) und Funktionstasten (16), wobei die Textseiten Symbole (S) aufweisen, die in den Zeilen (14) angeordnet sind und Funktionstasten bezeichnen, wobei das Rollorgan (16c) durch den Bediener betätigt werden kann, um eine Zeile (14) auszuwählen;
- einer Dialoganwendung, die durch den Bediener erstellt wird und Dialogdaten aufweisend, die auf den Zeilen (14) in Textform (T) mit alphanumerischen Zeichen anzeigbar sind, und einer internen Software (18), die Dialogdaten verarbeiten und den Anzeigeablauf verwalten kann,
**dadurch gekennzeichnet, dass** :
- mindestens eine auf dem Display (13) angezeigte und durch den Bediener ausgewählte Zeile (14) zwei Befehlsaktionen definiert, die ein Automatisierungsorgan anvisieren, wobei diese Aktionen gemäß der betrachteten Zeile Boolesche Befehlsaktionen oder Befehlsaktionen zur Inkrementation und Dekrementation sind, wobei die Zeile zwei jeweilige Symbole (Sa, Sb) aufweist, die sich links und rechts befinden und repräsentativ für die Befehlsaktionen sind,
- zwei Funktionstasten (16a, 16b), die sich seitlich links und rechts vom Display befinden, durch die Befehlsaktionssymbole (Sa, Sb) auf eindeutige Weise **gekennzeichnet** werden können und sich durch den Bediener betätigen lassen, um die eine oder die andere der zeilenspezifischen Befehlsaktionen anzuweisen.

2. Terminal nach Anspruch 1, **dadurch gekennzeichnet, dass** die Auswahl der Zeile (14s) das Auswählen der zwei Befehlsaktionssymbole (Sa, Sb) bewirkt, wobei jede mit einem Symbol verkettete Befehlsaktion durch Betätigung der jeweiligen Funktionstaste (16a, 16b) ausgelöst wird.

3. Terminal nach Anspruch 1, **dadurch gekennzeichnet, dass** mindestes eine der Zeilen (14) des Textes aus einem linken Abschnitt und einem rechten Abschnitt besteht, zwei jeweilige duale Befehlsaktionssymbole definierend, und die zwei jeweiligen Befehlsaktionssymbole (Sa, Sb) sind repräsentativ für duale Funktionen eines gleichen Bauteils (A) des Automatisierungssystems.

4. Terminal nach Anspruch 1, **dadurch gekennzeichnet, dass** die Auswahl einer Zeile (14s) die Anzeige eines spezifischen visuellen Attributs des oder der Befehlsaktionssymbole (Sa, Sb) bestimmt.

5. Terminal nach Anspruch 1, **dadurch gekennzeichnet, dass** das Befehlsaktionssymbol (20a, 20b) repräsentativ für den aktuellen Zustand der Booleschen Variablen, die der Befehlsaktion unterzogen wird, ist.

6. Terminal nach Anspruch 1, **dadurch gekennzeichnet, dass** die Boolesche Befehlsaktion, die durch die Betätigung der Funktionstaste (16a, 16b) ausgelöst wird, vom selbsthaltenden Typ oder impulsartigen Typ ist.

7. Terminal nach Anspruch 1, **dadurch gekennzeichnet, dass** die Boolesche Befehlsaktion, die durch die Betätigung der Funktionstaste (16a, 16b) ausgelöst wird, vom Set- oder Reset-Typ ist.

8. Terminal nach Anspruch 1, **dadurch gekennzeichnet, dass** außer einer Booleschen Befehlsaktion eine Transferaktion oder eine Inkrementations- oder Dekrementationsaktion vorgesehen ist, und das Befehlsaktionssymbol (S) ist dann jeweils ein Transferaktionssymbol (21) oder ein Befehlsaktionssymbol zur Inkrementation oder Dekrementation (22).

9. Terminal nach Anspruch 8, **dadurch gekennzeichnet, dass**, wenn die Befehlsaktion vom Inkrementations-oder Dekrementationstyp ist, eine der linken und rechten Funktionstasten (16a, 16b) der Inkrementation und die andere der Dekrementation zugeordnet ist.

10. Terminal nach Anspruch 8, **dadurch gekennzeichnet, dass**, wenn die Befehlsaktion vom Transfer- oder Inkrementations/Dekrementationstyp ist, eine spezifische Darstellung dem jeweiligen Symbol beigeordnet ist, während die Aktion erfolgt.

11. Terminal nach Anspruch 1, **dadurch gekennzeichnet, dass** bei der Anzeige einer Seite keine mit Befehlsaktionssymbolen versehene Zeile ausgewählt wird, wobei die Betätigung einer Befehlsaktion der Auswahl der jeweiligen Zeile (14s) mittels dem Rollorgan (16c) untergeordnet ist.

12. Terminal nach Anspruch 1, **dadurch gekennzeichnet, dass** die Aktionssymbole (S) und die Texte der Zeilen (14) ausschließlich aus ASCII-Zeichen bestehen.

13. Terminal nach Anspruch 1, **dadurch gekennzeichnet, dass** jedes Aktionssymbol (S) einen Pfeil (Fa, Fb) aufweist, dar nach links oder rechts gerichtet ist, wobei die Funktionstasten (16a, 16b) seitlich am Bildschirm angeordnet sind und dieselbe Richtung wie der benachbarte Pfeil (Fa, Fb) markieren.
